# EUROPEAN PATENT APPLICATION

(11) **EP 3 008 989 A1**
(43) Date of publication of application: **20.04.2016**
(21) Application number: 15189443.3
(22) Date of filing: 12.10.2015
(51) Int. Cl.: A01D 34/86

(54) **AUXILIARY APPARATUS FOR GRASS AND/OR SHOOTS CUTTING UNITS AND CUTTING UNIT COMPRISING SAID AUXILIARY APPARATUS**

(30) Priority: 13.10.2014 IT VI20140268
(71) Applicant: Zordan, Daniele, 36050 Montorso Vicentino (VI) (IT)
(72) Inventor: Zordan, Daniele, 36050 Montorso Vicentino (VI) (IT)
(74) Representative: Bonini, Ercole

(57) **Abstract**

Auxiliary apparatus (1; 30) for grass and/or shoots cutting units (50) of the type comprising: driving means (3) for moving the auxiliary cutting apparatus; a support unit for supporting the driving means and adapted to be associated to an end of the cutting unit (50). The driving means (3) are constituted by an endothermic engine and the auxiliary apparatus comprises a support unit and it is adapted to be kinematically connected to the cutting unit (50). The actuator unit comprises means for detecting and controlling the inclination of the driving means (3), the inclination detection and control means being configured to maintain the driving means (3) in a vertical position on a work surface when the auxiliary apparatus (1; 30) is associated to the cutting unit (50).

## Description

The present invention regards an auxiliary apparatus for grass and/or shoots cutting units, particularly but not exclusively adapted for cutting grass or shoots along roadsides or along trench edges.

Various types of large and small grass and/or shoots cutting units are known. As regards the large cutting apparatus, they are generally moved by means of tractors, while small apparatus are moved by means of small self-propelled machines driven by an operator.

In particular, as regards small cutting apparatus, they are made up of a self-propelled machine provided with a mechanical arm to which the cutting tool or tools is/are connected.

The cutting tools that are mounted shall be different depending on the type of operation to be carried out, and depending on whether one needs to cut grass only or also brushwood, shrubs, green trunks etc.

In such small machines, the engine that powers the cutting tool/s is integrally joined thereto.

In particular, the cutting tool/s is/are generally powered by a hydraulic circuit which conveys pressurised oil towards it/them.

However, the operation of the cutting apparatus in small machines reveals some drawbacks.

First and foremost, a drawback of these machines lies in the fact that, after running for a few hours, the oil circulating in the hydraulic circuit overheats, thus forcing the operator to interrupt the operation, turn off the machine and wait for the oil to cool down before resuming work.

Overcoming such oil overheating drawback would require using a non-hydraulic cutting tool or tools driving system.

A further drawback of such cutting apparatus lies in the fact that the cutting apparatus of the known type may operate for a limited period of time and then the machine has to be turned off. This implies extending the times required for cutting the grass and/or shoots on the surfaces subject of the operation.

The present invention aims at overcoming the aforementioned drawbacks.

In particular, the main object of the present invention is to provide an auxiliary apparatus for grass and/or shoots cutting units capable of overcoming the oil overheating drawback, a phenomenon typical of hydraulic engines.

A further object of the present invention is to obtain an auxiliary apparatus for grass and/or shoots cutting units capable of allowing the continuous use thereof for a longer period of time with respect to the time currently required to cut the grass and/or shoots.

Last but not least, the object of the present invention is to provide an endothermic engine capable of always remaining arranged according to a substantially vertical axis in the cutting apparatus thereof, even when the latter is required to carry out cutting operations in sloping grounds.

The aforementioned objects are attained by the present invention regarding an auxiliary cutting apparatus for grass and/or shoots cutting units according to claim one.

The aforementioned objects are also attained by a grass and/or shoots cutting apparatus according to claim twelve.

Further detailed characteristics of the invention are outlined in the dependent claims.

Advantageously, the auxiliary apparatus according to the invention comprises an endothermic engine which, according to its characteristics, allows overcoming the oil overheating problem, a phenomenon typical of hydraulic engines.

More advantageously, the cutting apparatus comprising the auxiliary apparatus according to the invention may be used continuously for several hours without engine shutting off or without problems occurring on the engine which drives the cutting tools.

More advantageously, the auxiliary cutting apparatus according to the invention may be connected to various types of cutting units, depending on the type of cutting required.

The aforementioned objects and advantages shall be more apparent from the description of a preferred embodiment of the invention, outlined hereinafter by way of non-limiting example, with reference to the attached drawings, wherein:
- fig. 1 represents an axonometric view of a self-propelled means provided with an auxiliary cutting apparatus according to the invention in an inoperative step;
- fig. 1a represents an enlarged view of the detail of the auxiliary cutting apparatus of fig. 1;
- fig. 2 represents an axonometric view of the self-propelled means and the auxiliary cutting apparatus of fig. 1 in the operating step;
- fig. 2a represents an enlarged view of a detail of fig. 2;
- figs. 3, 4, 5, 6, 7, 8 represent different front and lateral views of different operating configurations of the auxiliary cutting apparatus of fig. 1;
- figs. 9, 10, 11, 12, 13, 14 represent different front and lateral views of different operating configurations of a variant embodiment of the auxiliary cutting apparatus shown in figs. 3, 4, 5, 6, 7, 8;
- figs. 15 and 16 represent two plan views of the auxiliary cutting apparatus respectively of the embodiment of figs. 3-8 and the embodiment of figs. 9-14.

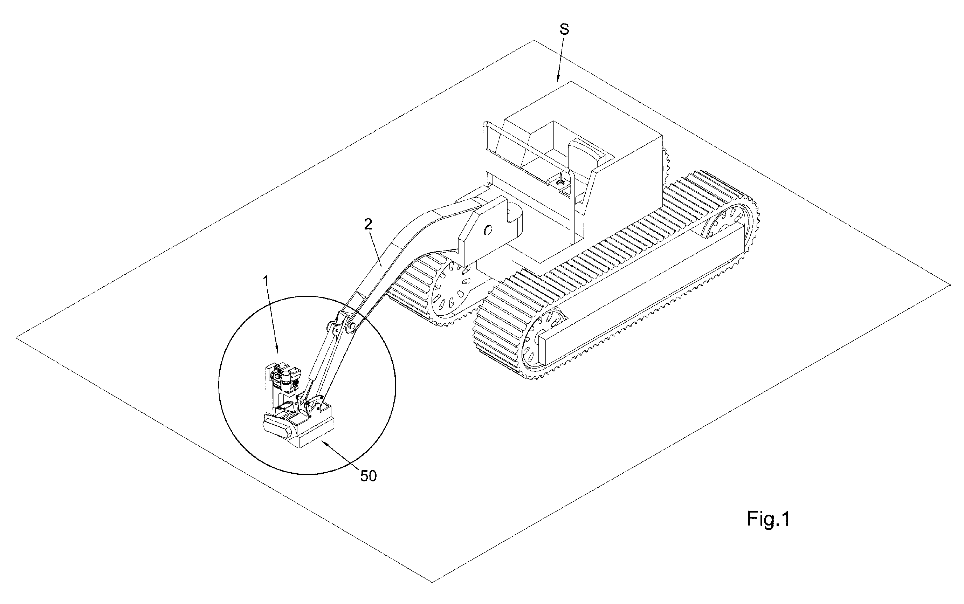

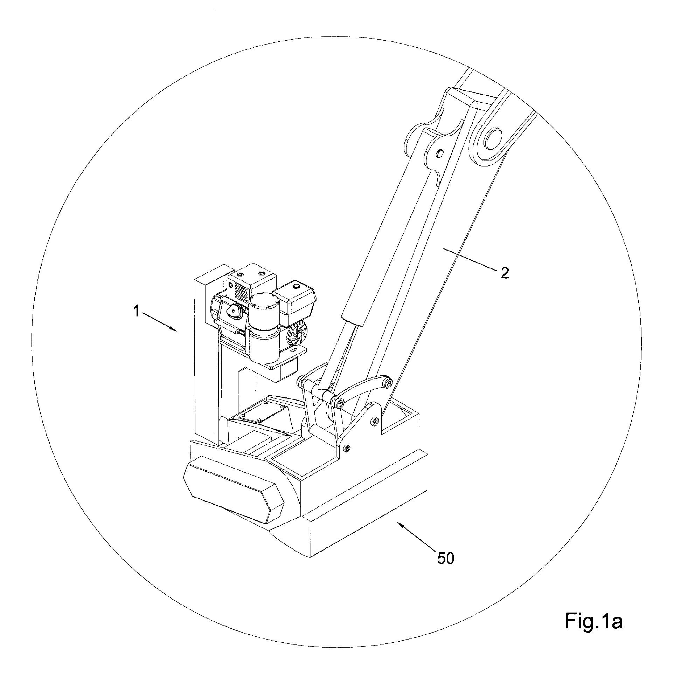

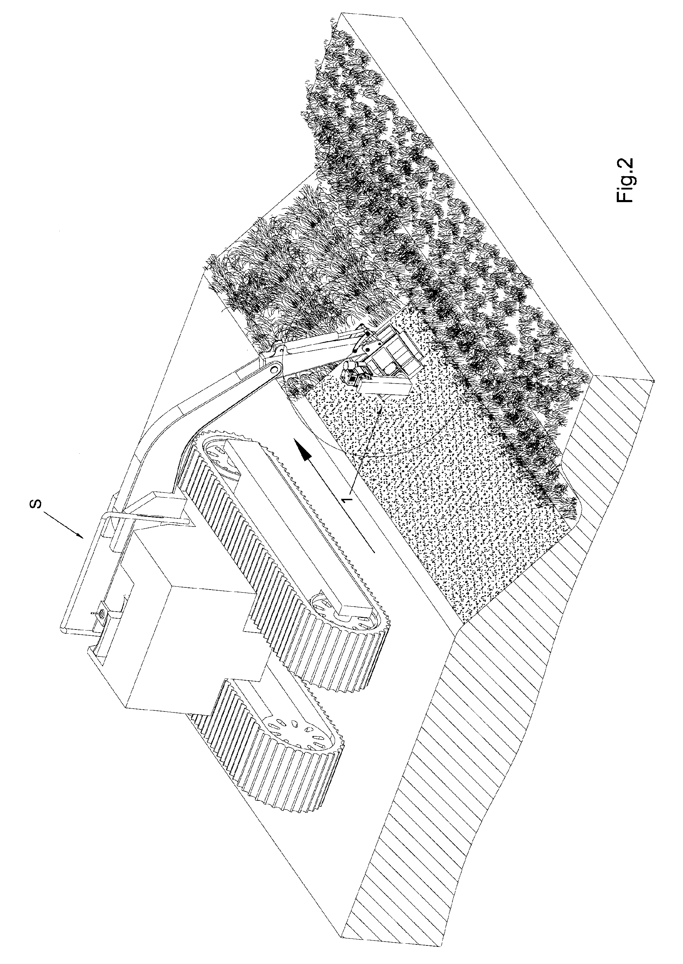

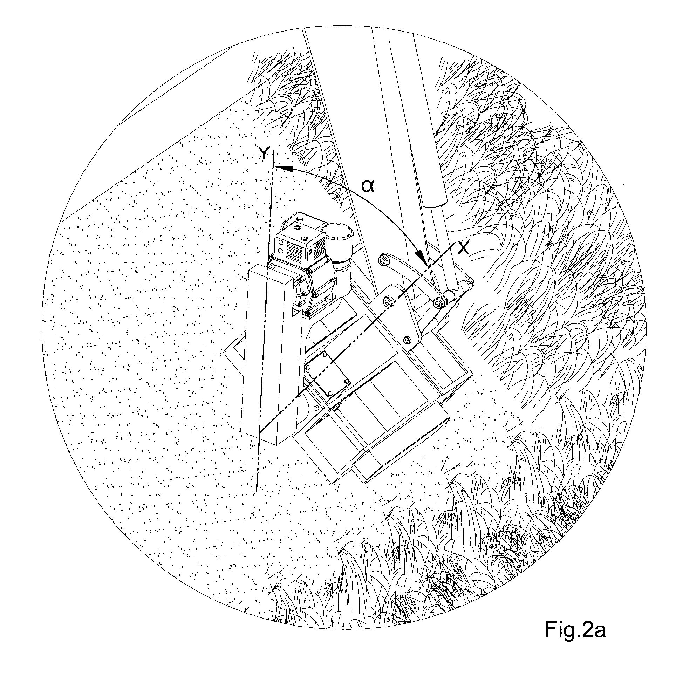

As observable in figs. 1, 1a, 2, 2a, they represent an auxiliary apparatus, indicated in its entirety with **1**, connected by means of a mechanical arm **2** to a self-propelled means **S** and adapted to be associated to a grass and/or shoots cutting unit **50.**

The auxiliary cutting apparatus **1** comprises:
- driving means **3** for moving the auxiliary cutting apparatus **1**;
- a support unit configured for supporting the driving means **3** and adapted to be associated to an end of the cutting unit **50**.

According to the present invention, the driving means **3** are constituted by an endothermic engine and the auxiliary apparatus **1** comprises an actuator unit **6,** which is associated to the support unit and it is adapted to be kinematically connected to the cutting unit **50.**

Still according to the invention, the actuator unit **6** comprises means for detecting and controlling the inclination of the aforementioned endothermic engine **3** which are configured to maintain the latter in a substantially vertical position on a work surface when the auxiliary apparatus **1** is associated to the cutting unit **50,** as observable in the detail of fig. 2a.

Fig. 2a shows the angle **α,** comprised between the inclination axis **X** of the ground and the vertical axis **Y** along which the endothermic engine **3** lies following the rotation thereof.

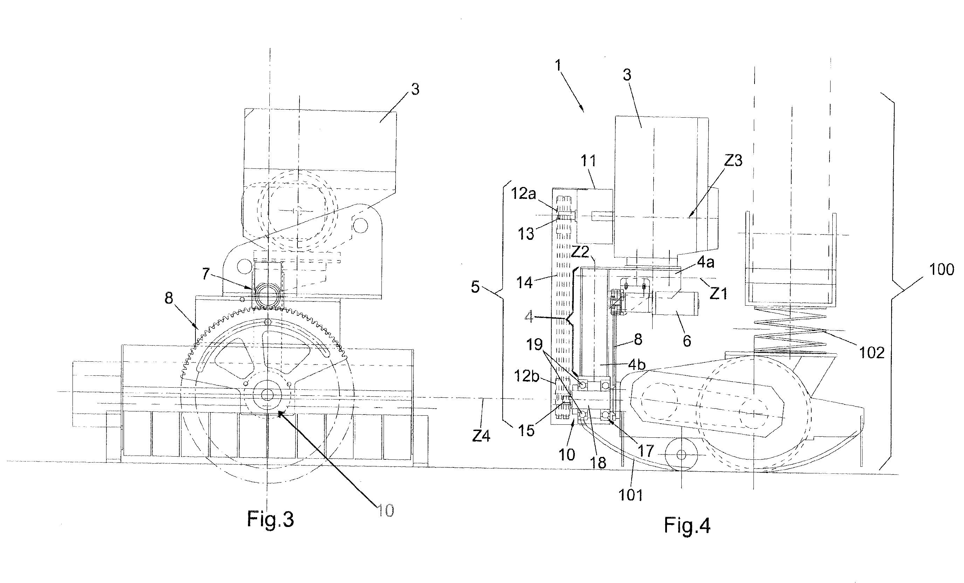

As observable in figs. 3-5, the aforementioned means for controlling the inclination of the endothermic engine **3** are housed in the support unit and they preferably consist in an inclinometer (not shown in the figures) and a control unit (not shown in the figures) of the type currently available in the market. With reference to fig. 3, the actuator unit comprises an electric engine **6** associated to the unit for supporting the driving means **3** and a pinion **7** connected to a rack **8**, which moves according to a motion integrally joined to the cutting unit **50**.

The operation of the aforementioned pinion-rack mechanism shall be illustrated further in detail hereinafter.

As observable in figs. 3-5, the support unit is constituted by a substantially L-shaped bracket **4** connected beneath the endothermic engine **3** at one end and coupled to the cutting unit **50** by means of a rotation joint **10** at the opposite end.

With reference to fig. 4, the aforementioned bracket **4** comprises:
- a first portion **4a** arranged according to a substantially horizontal longitudinal axis **Z1** and configured to support the driving means **3**, beneath which the electric engine **6** is associated;
- a second portion **4b** which extends according to an axis **Z2** substantially orthogonal to the longitudinal axis **Z1** of the first portion **4a** and to the rotation axis **Z3** of the driving means **3.**

The aforementioned rotation joint **10** comprises a hollow pin **18** and a sleeve **17** coupled to the hollow pin **18** by interposing rolling bearings **19**.

A gearbox **11**, which transmits motion to a first pulley **12a** coupled to a projecting pin **13** which protrudes from the gearbox **11,** is connected to the endothermic engine **3**.

A belt **14** which transmits motion to a second pulley **12b** is mounted on the first pulley **12a**.

Though the belt **14** is preferably of the trapezoidal type, a different type of belt can be used.

A transmission shaft **15**, inserted passing through in the hollow pin **18**, is coupled to the second pulley **12b**.

The transmission shaft **15** then transmits motion to the cutting tools of the cutting unit **50** so that they can carry out the cutting operations on the work surface.

Obviously, the cutting tools used may vary depending on the type of cutting required.

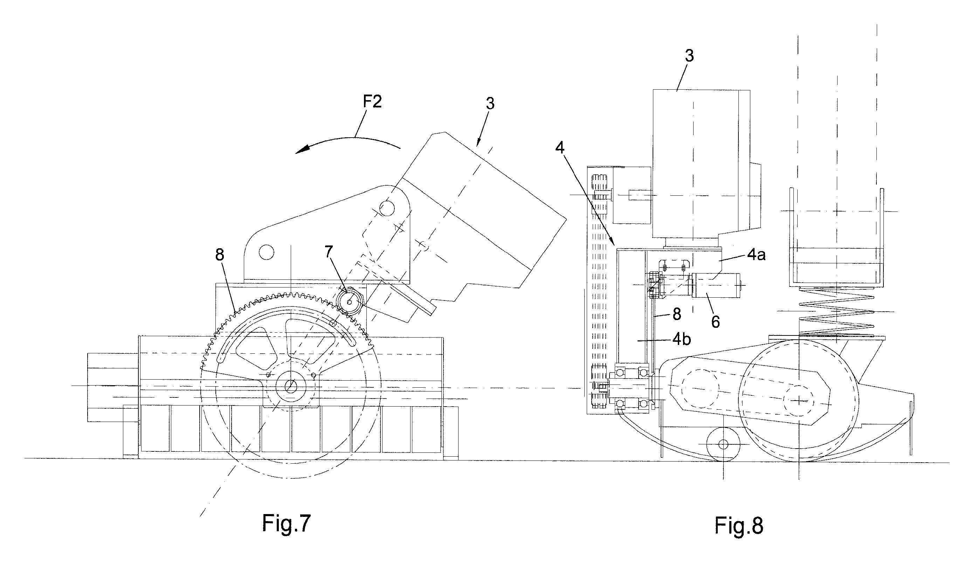

Figs. 4, 6, 8 show that the rack is fixed and integrally joined to the hollow pin **18**, and thus it is configured to rotate around the rotational axis **Z4** of the rotation joint **10.**

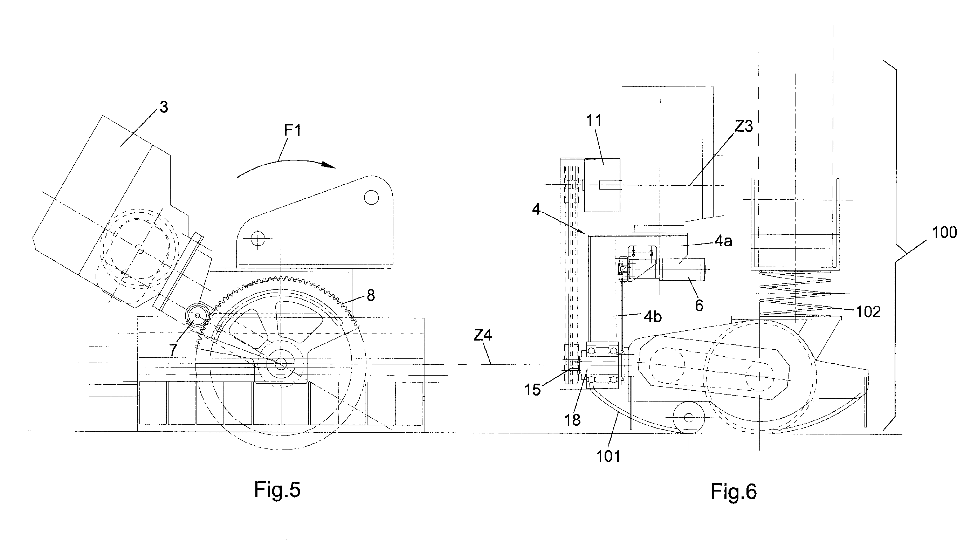

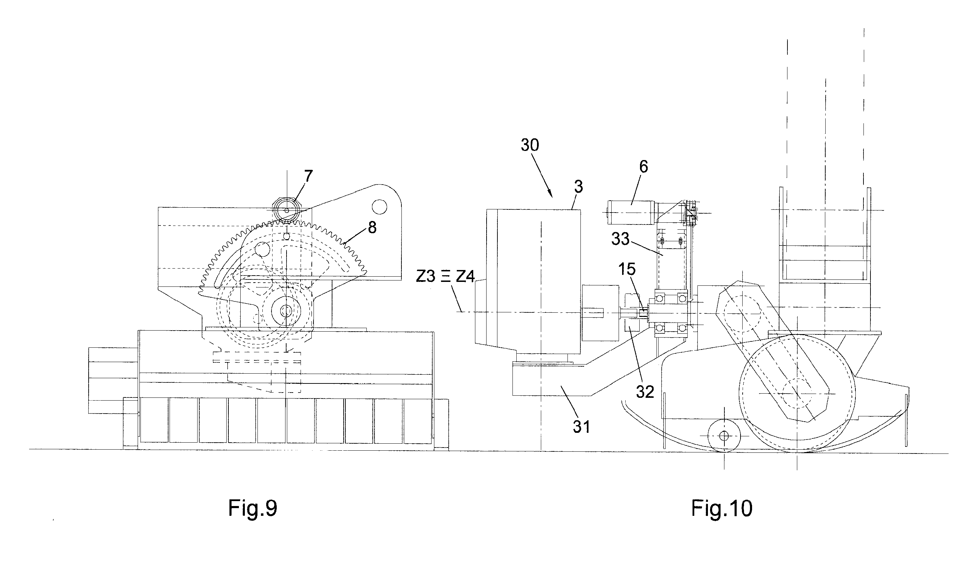

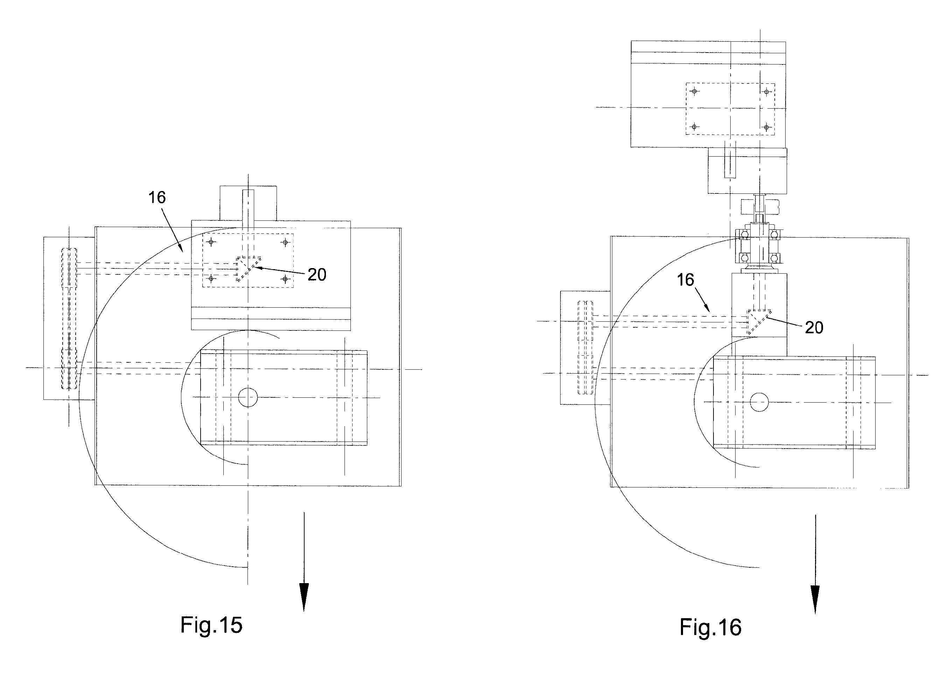

Then, as observable in figs. 15 and 16, the auxiliary apparatus **1** is connected to an angular return unit **16** of the type comprising a conical gear **20**, shown in figs. 6 and 10.

According to a variant embodiment not shown in the figures, the aforementioned gear may also be of the non-conical type.

The auxiliary cutting apparatus **1** and the cutting unit **50** belong to a cutting apparatus, indicated in its entirety with **100**.

Preferably but not necessarily, the cutting apparatus **100** comprises slides **101** for positioning on the ground, the slides having the advantage of protecting the cutting apparatus against possible impacts against bumps or uneven areas. Preferably but not necessarily, the cutting apparatus also provides for the presence of a spring **102,** shown in figs. 4, 6, 8, constrained to the mechanical arm **2** of the self-propelled machine **S** at one end, and to the cutting unit **50** at the opposite end.

Advantageously, the presence of the spring **102** allows better movement of the cutting apparatus **100** and the cutting unit **50** connected thereto.

Equally advantageously, a rotation system (not shown in the figures) which allows the rotation of the cutting apparatus **100** by 180° is present in the spring **102.**

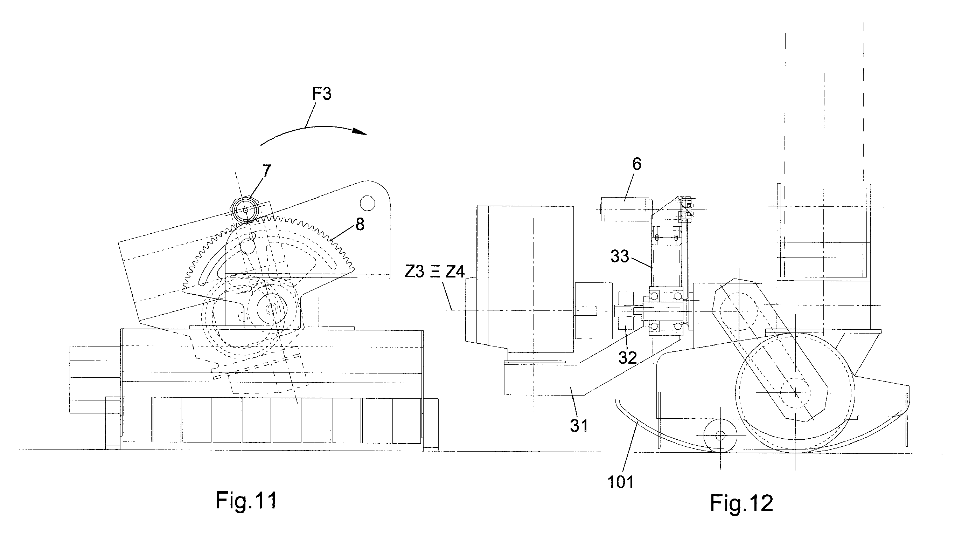

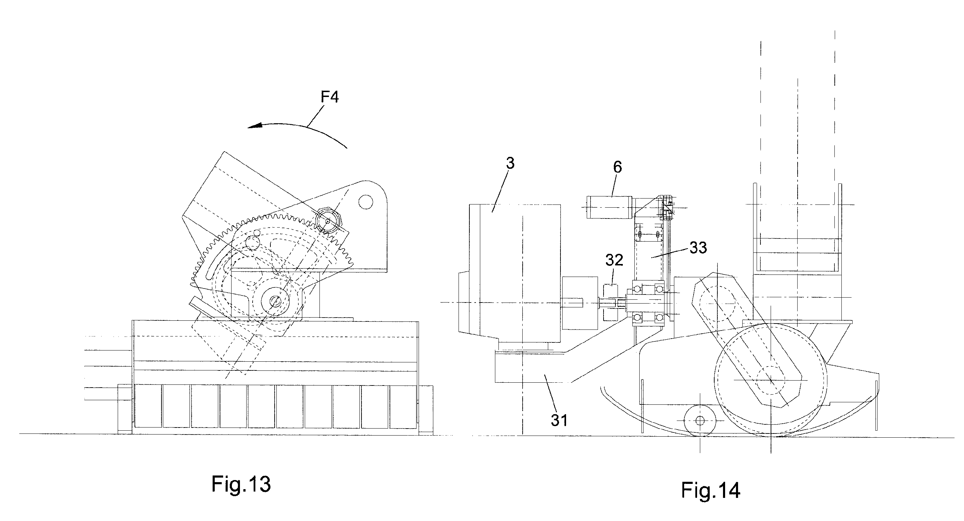

Figs. 9-14 represent a variant embodiment of the auxiliary cutting apparatus according to the invention, now indicated in its entirety with **30**, differing from the embodiment illustrated previously due to the fact that in this case it is no longer provided with the rack-pinion kinematic unit, since the endothermic engine **3** is now arranged coaxial to the transmission shaft **15**.

Thus, the axes **Z3** and **Z4**, respectively of the endothermic engine **3** and the transmission shaft **15**, now coincide.

In this case, motion from the endothermic engine **3** is no longer transmitted to the transmission shaft **15** by means of a belt and pulleys but simply through a joint element **32**.

In addition, the electric engine **6** is not arranged beneath the bracket, now indicated with **31**, but above the same bracket **31** and it is connected to the rotation joint **10** by means of a support element **33**.

Operatively, the operation of the auxiliary cutting apparatus according to the invention occurs as follows.

The endothermic engine **3** is started when one wants to cut the grass and/or shoots on the desired surface.

Once the engine **3** is started, it transmits motion to the gearbox **11**, which then transmits motion to the transmission shaft **15** by means of the belt-pulley kinematic unit **5**, in the case of the embodiment of figs. 3-8, or directly by means of the joining element **32**, in the embodiment of figs. 9-14.

The transmission shaft **15** then transmits motion to the cutting unit **50** by means of the angular return unit **16** of figs. 15 and 16.

As observable in figs. 3-8 and in figs. 9-14, when the cutting apparatus **100** is required to operate along sloping grounds, the cutting apparatus bends following the inclination of the ground and, thus, also the endothermic engine **3** tends to incline.

An inclination sensor which sends a signal to the control unit is activated upon exceeding a given preset inclination angle.

Upon receiving the signal, the control unit activates the electric engine **6** which operates the pinion **7** moving it along the rack **8** in an opposite direction with respect to the direction of inclination of the cutting unit **50**.

The sliding direction of the pinion is indicated by arrows **F1**, **F2**, **F3**, **F4**, shown in figs. 5, 7, 9, 11, 13.

Thus, if the cutting unit **50** bends clockwise, the pinion **7** shall move along the crack **8** in an anticlockwise direction, and vice versa.

The pinion **7** ascends along the rack **8** until the endothermic engine **3** returns to the vertical position. At this point, the inclinometer is deactivated and stops sending signals to the control unit, which in turn deactivates the electric engine **6.**

In both cases, the endothermic engine **3** returns to the vertical position by means of a rotary motion around the axis of the hollow cable **18** and the transmission shaft **15.**

Advantageously, the auxiliary cutting apparatus according to the invention may be combined with different cutting units and it may be sold by the end user as a kit to be associated to the desired cutting unit, depending on the requirement.

More advantageously, due to the use of an endothermic engine, the auxiliary cutting apparatus according to the invention may operate continuously even for 10 hours, while the cutting devices of the known type may generally be used for about 2-3 hours.

In the light of the description above, it is clear that the auxiliary cutting apparatus and the cutting apparatus according to the invention attain the preset objects.

In particular, the object of obtaining a grass and/or shoots auxiliary cutting apparatus capable of overcoming the oil overheating drawback by using an endothermic engine is attained.

In addition, the object of attaining an auxiliary cutting apparatus that can be continuously used for long periods of time with respect to the prior art is also attained.

In implementation, the auxiliary cutting apparatus and the cutting apparatus according to the invention may be subjected to modifications which, if falling within the scope of protection of the claims that follow, shall be deemed protected by the present patent.

## Claims

1. Auxiliary apparatus (1; 30) for grass and/or shoots cutting units (50) of the type comprising:
- driving means (3) for moving said auxiliary cutting apparatus;
- a support unit configured for supporting said driving means and adapted to be associated to an end of said cutting unit (50);
**characterised in that** said driving means (3) are constituted by an endothermic engine **and in that** it comprises an actuator unit associated to said support unit and adapted to be kinematically connected to said cutting unit (50), said actuator unit comprising means for detecting and controlling the inclination of said driving means (3), said inclination detection and control means being configured to maintain said driving means (3) in a substantially vertical position on a work surface when said auxiliary apparatus (1; 30) is associated to said cutting unit (50).

2. Auxiliary apparatus (1; 30) according to claim 1, **characterised in that** said inclination detection and control means comprise:
- an inclination sensor which is activated upon attaining a determined preset inclination angle (α) with respect to said substantially vertical position assumed by the driving means (3);
- a control unit configured to receive signals from said inclination sensor and for activating said actuator unit upon attaining said preset inclination angle (α).

3. Auxiliary apparatus (1; 30) according to claim 1 or 2, **characterised in that** said actuator unit comprises:
- an electric engine (6);
- a pinion (7) connected to said electric engine (6) and configured to mesh on a rack (8), said rack (8) being adapted to move from an integral motion to the motion of said cutting unit (50).

4. Auxiliary apparatus (1; 30) according to any one of the preceding claims, **characterised in that** said actuator unit is configured to rotate said driving means (3) around an axis (Z3) substantially parallel to the direction of movement of the cutting unit (50) to which said auxiliary apparatus (1; 30) is associated.

5. Auxiliary apparatus (1) according to any one of the preceding claims, **characterised in that** it further comprises a kinematic unit adapted to transmit motion from said driving means (3) to said cutting unit (50), when said auxiliary apparatus (1) is associated to the same cutting unit.

6. Auxiliary apparatus (1) according to any one of the preceding claims, **characterised in that** said support unit comprises a bracket (4), said bracket (4) being substantially L-shaped and being adapted to be mechanically connected to said cutting unit (50) through a rotation joint (10).

7. Auxiliary apparatus (1) according to claim 6, **characterised in that** said bracket (4) comprises:
- a first portion (4a) configured for supporting said driving means (3), beneath which said electric engine (6) is associated;
- a second portion (4b) which extends according to an axis (Z2) substantially orthogonal to the longitudinal axis (Z1) of said first portion and to the rotation axis (Z3) of said driving means.

8. Auxiliary apparatus (1) according to claim 6 or 7, **characterised in that** said rotation joint (10) comprises:
- a sleeve (17);
- a hollow pin (18) projecting from said cutting unit (50), to which said sleeve (17) is coupled.

9. Auxiliary apparatus (1) according to claim 8, **characterised in that** said sleeve (17) is coupled to said hollow pin (18) by interposing rolling bearings (19).

10. Auxiliary apparatus (30) according to claim 8 or 9, **characterised in that** said driving means (3) are arranged coaxial to said rotation joint (10).

11. Auxiliary apparatus (1) according to any one of claims 8 or 9, **characterised in that** said hollow pin (18) is configured for receiving the insertion of a shaft (15) belonging to said kinematic unit.

12. Grass and/or shoots cutting apparatus (100), comprising:
- an auxiliary apparatus (1; 30);
- a cutting unit (50) to which said auxiliary apparatus (1; 30) is associated, **characterised in that** said auxiliary apparatus is obtained according to any one of the preceding claims.

13. Cutting apparatus (100) according to claim 12, **characterised in that** said cutting unit (50) further comprises an angular return unit (16) configured to receive motion from said kinematic unit and for transmitting motion to said cutting unit (50) through kinematic members (20).
